# EUROPEAN PATENT SPECIFICATION

(11) **EP 1 721 425 B1**
(45) Date of publication and mention of the grant of the patent: **21.02.2018**
(21) Application number: 05716870.0
(22) Date of filing: 02.03.2005
(51) Int. Cl.: H04L 12/721

(54) **PROBABILISTIC LINK SELECTION IN ROUTING ALGORITHM**
WAHRSCHEINLICHKEITSTHEORETISCHE VERBINDUNGSAUSWAHL IN EINEM LEITWEGLENKUNGSALGORITHMUS
SÉLECTION PROBABILISTE D'UN LIEN DANS UN ALGORITHME DE ROUTAGE

(30) Priority: 05.03.2004 EP 04251291
(43) Date of publication of application: 15.11.2006
(73) Proprietor: Nokia Solutions and Networks GmbH & Co. KG, 81541 Munich (DE)
(72) Inventor: EDWIN, Richard, Southampton SO15 4HU (GB); FAN, Changpeng, 10557 Berlin (DE); REEVE, Andrew, Winchester, Hants SO22 5AH (GB)
(74) Representative: Weidel, Gottfried
(86) International application number: PCT/EP2005/050904
(87) International publication number: WO 2005/091570

(56) References cited:
- WO-A-00/69210
- R. GHOSH, G. VARGHESE: "Symmetrical Routes and Reverse Path Congestion Control"[Online] 11 September 1997 (1997-09-11), pages 0-17, XP002301045 Retrieved from the Internet: URL:http://citeseer.ist.psu.edu/rd/8098612 6%2C83559%2C1%2C0.25%2CDownload/http://cit eseer.ist.psu.edu/cache/papers/cs/310/http :zSzzSzwww.cs.wustl.eduzSzcszSztechreports zSz1997zSzwucs-97-37.pdf/ghosh97symmetrica l.pdf> [retrieved on 2004-10-12]
- K. A. BERMAN: "Cost-Constrained Matchings and Disjoint Paths" INTERNET ARTICLE, [Online] 31 December 2003 (2003-12-31), pages 1-15, XP002301046 Retrieved from the Internet: URL:http://www.ececs.uc.edu/~berman/resear ch/ccm.pdf> [retrieved on 2004-10-15]
- DAWN: "Optical WDM Research Publications" INTERNET ARTICLE, [Online] 15 October 2004 (2004-10-15), pages 1-2, XP002301066 Retrieved from the Internet: URL:http://dawn.cs.umbc.edu/wdm-pubs.html> [retrieved on 2004-10-15]
- NILESH M. BHIDE, KRISHNA M. SIVALINGAM, TIBOR FABRY-ASZTALOS: "Routing Mechanisms Employing Adaptive Weight Functions for Shortest Path Rounting in Optical WDM Networks" JOURNAL OF PHOTONIC NETWORK COMMUNICATIONS, [Online] 31 July 2001 (2001-07-31), pages 1-20, XP002301067 Retrieved from the Internet: URL:http://dawn.cs.umbc.edu/Papers/2000/PN ET01-final.ps.gz> [retrieved on 2004-10-15]
- J. MOY: "OSPF Version 2" IETF RFC, [Online] 30 April 1998 (1998-04-30), page 1-5,115, XP002301068 Retrieved from the Internet: URL:http://www.cs.utk.edu/~moore/RFC-PDF/r fc2328.pdf> [retrieved on 2004-10-15]

## Description

The invention is related to a method and a network node for routing a call through a communication network preferably by using a Quality of Service routing algorithm.

A common and important technique for routing connections through a network is known as Source Node Routing (SNR). In this technique, the source of a new connection calculates the route based on its own knowledge of the network topology and the state and utilization of the links therein. Routers periodically, or following a threshold exceeding event, flood the state of the links to which they are attached throughout the network. In this way, the source nodes find out about the current state of the network from time to time. However the information (known as the link state database) rapidly becomes out of date, and also each source node has the same view of the network so that they all tend to choose the same set of links which soon become full causing calls to be blocked, while some links still have free capacity to support new connections. One possibility to solve this problem could be that the frequency of the link state flooding will be increased but this causes increased signalling traffic.

R. Ghosh, G. Varghese: « Symmetrical Routes and Reverse Path Congestion Control » [Online] 11 September 1997 (1997-09-11), pages 0-17, XP002301045 describe new mechanisms to deal with asymmetries that arise in routing protocols. We show how to avoid route asymmetries (due to non-unique shortest paths) by adding random integer link costs. The document shows in detail how RIP can be modified to avoid route asymmetry with high probability, without affecting either its efficiency or performance metrics such as convergence time. Symmetrical intra-domain routing also makes possible a new form of congestion control that we call Reverse Path Congestion Control (RPCC). The document shows, by using simulations, that RPCC can augment existing TCP congestion control mechanisms to improve start up behaviour and to avoid losses at the boundary between domains and the backbone.

K. A. Berman: "Cost-Constrained Matchings and Disjoint Paths" Internet Article, [Online] 31 December 2003 (2003-12-31), pages 1-15, XP002301046 describes a graph (Let G = (V, E)), where the edges are weighted with elements from a finite commutative semigroup (S, +), and consider the problem of finding a matching value M that covers a given set U of vertices whose cost c(M) (where c(M) is the sum of the weights on the edges of M) satisfies a given constraint, i. e., for a given constraint function **Φ** mapping S to {0, 1}, **Φ**(c(M)) = 1. This problem is NP-complete for exponential size semigroups. In this document for small semigroups S, i. e., the size of S is bounded above by a unique element x/2 ∈ S such that 2(x/2) = x, we present an NC² algorithm (on an EREW PRAM) for computing the parity of the number of such matchings and an RNC² algorithm for finding one. In the case where the cost-constraint is monotonic, i. e., for every pair of elements x, y ∈ S, x + y satisfies the constraint implies that x also does, this yields a solution to the multiple constrained path selection problem, and more generally to the cost-constrained disjoint path problem. Finally, we present generalizations of our results to binary matroids.

WO 00/69210 evaluates routes R in a communications network consisting of switching nodes and of transmission paths. To this end, modified link costs are established from link costs assigned to the transmission paths preferably using random numbers, and the routes are evaluated according to the modified link costs. If the modified link costs are established with each call request, connections which can be set-up along a number of routes with identical minimal route costs are evenly distributed on these routes while retaining existing routing algorithms.

For finding a route from a source node to a destination node through a network, one well-known algorithm is Dijkstra's algorithm which computes the shortest path. One variant of this algorithm has sometimes been referred to as OSPF - Open Shortest Path First algorithm, since it is used in the Internet routing protocol with the same name, which has been specified by RFC 2328 and other related documents (J. Moy, "OSPF Version 2", RFC 2328, April 1998.). The use of QoS routing in mobile core networks has become necessary in order to meet the needs of multimedia applications and to improve the efficiency of the network. For QoS routing, routing algorithms must be designed to meet QoS constraints. One such algorithm is called CSPF, which stands for Constrained Shortest Path First. It is an algorithm which searches for the shortest path through a network which obeys certain constraints such as minimum bandwidth, maximum delay. This is based on the Dijkstra's algorithm for computation of the shortest path. CSPF can be used within a node running OSPF protocol.

Many studies have been performed into the benefits of QoS routing but these concentrate on the benefits of QoS routing without taking into account the effect of mobility by an ever increasing population of users.
Mobile subscribers cause varying load on network elements and routers. There are unacceptable calls blocking ratios during some periods of the day for non-QoS routing algorithms (e.g. OSPF). QoS routing algorithms are shown to cope with the varying population distributions much more efficiently than non-QoS algorithms.

The present invention aims to solve the blocking of calls problem.

Said problem is solved by the features mentioned in the independent claims. Preferred embodiments of the invention are described in the dependent claims.

One main aspect for finding a path for routing a call from a source-node to a destination-node through a communication network is a method and an apparatus, which solve the problem by using a shortest path algorithm such as Dijkstra or Bellman-Ford but with the distance being a random variable dependent on the link's capacity and free bandwidth. In this way routers will not tend to choose the same links and load sharing of the connections across the network will be achieved, decreasing congestion and increasing call acceptance probability. Any function of the links (paths) or the network could be used as a random variable including historical information and path parameters.

A main advantage of the invention is to solve the blocking of calls problem without requiring manual modification of the costs of the links involved, such that the invention can improve the overall efficiency of the network.

Preferred embodiments of the present invention will be described with reference to the accompanying drawing in which:
Figure 1 shows an example method for choosing a random distance for a link,
Figure 2 illustrates the selection of at least one path between a source node SN and a destination node DN.

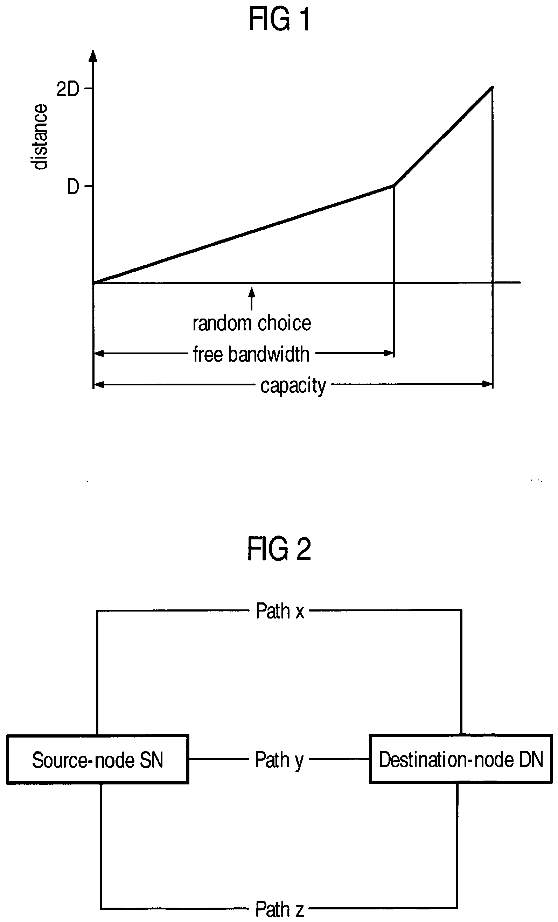

Figure 1 shows an example method for choosing a random distance for a link. Assume a baseline distance D for the link has been set up by configuration or other technique. A random number between 0 and the link's capacity is generated and the distance is determined from the graph. The distance is thus a resulted random number. It can be seen that if a link has a lot of free bandwidth, its distance is more likely to be in the range 0-D than in the range D-2D. The lower the distance, the more likely a link is to be selected. This type of function has the additional advantage that it is very unlikely that there will be ties, increasing the effectiveness of the load sharing.

Figure 2 illustrates the selection of at least one path between a source node SN and a destination node DN. A source node SN maintains a links state database. One possibility to propagate/signal the state information to one's neighbor nodes is to employ OSPF protocol. The Link State Advertisement (LSA) message of OSPF serves mainly this purpose. Normally the link state database will be out of date owing to the changing configuration of connections through the network and the OSPF propagation delays. When the source Node SN wants to calculate a route/path from itself to a destination node DN it (SN) computes a route/path for the data of the call through the network. For finding a route/path from the source node SN to a destination node DN (i. e. mobile end device, mobile computer, computer, PDA etc.) through a network the source node SN uses an algorithm such as Dijkstra's algorithm, Bellman-Ford or any similar Quality of Service routing algorithm to select/compute a shortest path through the network. When considering a route/path, the shortest path from a source node SN to a destination node DN is used. This is the path with the minimal total cumulated distance or cost of the links it comprises. In this invention, the total distance or cost is a random number, being the sum of the distances/costs of the involved links, some of which are randomized. The distance/cost of at least one involved link is randomized. For such a link, a random number for its distance/cost is generated using a method such as that depicted in Fig. 1. A special case is to randomize the distances/costs of all involved links. A separate random number is normally generated for each randomized link of each path considered. With this invention each source node SN of the network generates random numbers of its own, independently from other nodes and selects the best path for routing the data of the call. Furthermore each route request uses different random numbers, independent of those of previous requests.

## Claims

1. Method for finding a path for routing a call from a source-node (SN) to a destination-node (DN) through a communication network, **characterized in that** the source-node (SN) generates a random-number dependent on the link's capacity and free bandwidth, that depending on the generated random-number at least one path between the source-node (SN) and the destination-node (DN) will be selected from the source-node (SN) and that the source-node (SN) generates for each selected path a separate random-number,
wherein the source-node (SN) maintains a links state database, and when the source-node (SN) wants to calculate a path from itself to a destination-node (DN) the source-node (SN) computes a path for the data of the call through the network, wherein for finding a path from the source-node (SN) to the destination-node (DN) through the network the source-node (SN) selects a shortest path through the network, wherein the shortest path is the path with the minimal total cumulated distance or cost of the links it comprises, wherein the distance or cost of at least one involved link is randomized, and wherein the distance being a random variable dependent on the link's capacity and free bandwidth.

2. Method according to claim 1, **characterized in that** the random number is a variance of a link distance.

3. Method according to any one of the preceding claims, **characterized in that** signalling to other nodes throughout the network is implemented by OSPF-LSA-messages.

4. Method according to any one of the preceding claims, **characterized in that** the random number is the sum of random variables calculated at each link of a considered path.

5. Method according to any one of the preceding claims, **characterized in that** the method uses a Quality of Service routing algorithm for selecting a path.

6. Method according to claim 5, **characterized in that** the Dijkstra-and/or the Bellman-Ford-Algorithm will be used as Quality of Service routing algorithm.

7. Method according to any one of the preceding claims, **characterized in that** a destination node (DN) is an end device, an end device of a mobile network, a computer, a mobile computer and/or a PDA.

8. Method according to any one of the preceding claims, **characterized in that** a communication network is a mobile communication net- work and/or a data network.

9. Apparatus for finding a path for routing a call from a source-node (SN) to a destination-node (DN) through a communication network,
- with the source-node (SN) for generating a random-number dependent on the link's capacity and free bandwidth,
- with the source-node (SN) for selecting at least one path between the source-node (SN) and the destination-node (DN) depending on the generated random-number
- with the source-node (SN) for generating a separate random-number for each selected path,
wherein the source-node (SN) maintains a links state database, and when the source-node (SN) wants to calculate a path from itself to a destination-node (DN) the source-node (SN) computes a path for the data of the call through the network, wherein for finding a path from the source-node (SN) to the destination-node (DN) through the network the source-node (SN) selects a shortest path through the network, wherein the shortest path is the path with the minimal total cumulated distance or cost of the links it comprises, wherein the distance or cost of at least one involved link is randomized, and wherein the distance being a random variable dependent on the link's capacity and free bandwidth.

10. Apparatus according to claim 9, **characterized in that** said apparatus for signalling use OSPF LSA messages.

## Patentansprüche

1. Verfahren zum Finden eines Pfades zur Leitweglenkung eines Anrufs von einem Quellknoten (Source-Node, SN) zu einem Zielknoten (Destination-Node, DN) durch ein Kommunikationsnetzwerk, **dadurch gekennzeichnet, dass** der Quellknoten (SN) eine Zufallszahl abhängig von der Kapazität der Verbindung und der freien Bandbreite generiert, dass abhängig von der generierten Zufallszahl mindestens ein Pfad zwischen dem Quellknoten (SN) und dem Zielknoten (DN) aus dem Quellknoten (SN) ausgewählt wird und dass der Quellknoten (SN) für jeden ausgewählten Pfad eine eigene Zufallszahl erzeugt,
wobei der Quellknoten (SN) eine Verbindungsstatusdatenbank verwaltet, und wenn der Quellknoten (SN) einen Pfad von sich selbst zu einem Zielknoten (DN) berechnen möchte, der Quellknoten (SN) einen Pfad für die Daten des Anrufs durch das Netzwerk errechnet, wobei zum Finden eines Pfads von dem Quellknoten (SN) zu dem Zielknoten (DN) durch das Netzwerk der Quellknoten (SN) einen kürzesten Pfad durch das Netzwerk auswählt, wobei der kürzeste Pfad der Pfad mit der geringsten kumulierten Gesamtentfernung oder den Kosten der Verbindungen, die er umfasst, ist, wobei die Entfernung oder die Kosten von mindestens einer beteiligten Verbindung randomisiert sind, und wobei die Entfernung eine Zufallsvariable ist, die von der Kapazität der Verbindung und der freien Bandbreite abhängt.

2. Verfahren nach Anspruch 1, **dadurch gekennzeichnet, dass** die Zufallszahl eine Varianz einer Verbindungsentfernung ist.

3. Verfahren nach einem der vorhergehenden Ansprüche, **dadurch gekennzeichnet, dass** die Signalisierung zu anderen Knoten im Netzwerk durch OSPF-LSA-Nachrichten implementiert wird.

4. Verfahren nach einem der vorhergehenden Ansprüche, **dadurch gekennzeichnet, dass** die Zufallszahl die Summe der Zufallsvariablen ist, die an jeder Verbindung eines betrachteten Pfades berechnet wird.

5. Verfahren nach einem der vorhergehenden Ansprüche, **dadurch gekennzeichnet, dass** das Verfahren einen Dienstqualitäts-Leitweglenkungsalgorithmus zur Auswahl eines Pfads verwendet.

6. Verfahren nach Anspruch 5, **dadurch gekennzeichnet, dass** der Dijkstra- und/oder der Bellman-Ford-Algorithmus als Dienstqualitäts-Leitweglenkungsalgorithmus verwendet wird.

7. Verfahren nach einem der vorhergehenden Ansprüche, **dadurch gekennzeichnet, dass** ein Zielknoten (DN) ein Endgerät, ein Endgerät eines Mobilfunknetzwerks, ein Computer, ein mobiler Computer und/oder ein PDA ist.

8. Verfahren nach einem der vorhergehenden Ansprüche, **dadurch gekennzeichnet, dass** ein Kommunikationsnetzwerk ein mobiles Kommunikationsnetzwerk und/oder ein Datennetzwerk ist.

9. Vorrichtung zum Finden eines Pfades zur Leitweglenkung eines Anrufs von einem Quellknoten (SN) zu einem Zielknoten (DN) durch ein Kommunikationsnetzwerk,
- mit dem Quellknoten (SN) zum Erzeugen einer Zufallszahl abhängig von der Kapazität der Verbindung und der freien Bandbreite,
- mit dem Quellknoten (SN) zum Auswählen mindestens eines Pfades zwischen dem Quellknoten (SN) und dem Zielknoten (DN) in Abhängigkeit von der erzeugten Zufallszahl,
- mit dem Quellknoten (SN) zum Erzeugen einer eigenen Zufallszahl für jeden ausgewählten Pfad, wobei der Quellknoten (SN) eine Verbindungsstatusdatenbank verwaltet, und wenn der Quellknoten (SN) einen Pfad von sich selbst zu einem Zielknoten (DN) berechnen möchte, der Quellknoten (SN) einen Pfad für die Daten des Anrufs durch das Netzwerk errechnet, wobei zum Finden eines Pfads von dem Quellknoten (SN) zu dem Zielknoten (DN) durch das Netzwerk der Quellknoten (SN) einen kürzesten Pfad durch das Netzwerk auswählt, wobei der kürzeste Pfad der Pfad mit der geringsten kumulierten Gesamtentfernung oder den Kosten der Verbindungen, die er umfasst, ist, wobei die Entfernung oder die Kosten von mindestens einer beteiligten Verbindung randomisiert sind, und wobei die Entfernung eine Zufallsvariable ist, die von der Kapazität der Verbindung und der freien Bandbreite abhängt.

10. Vorrichtung nach Anspruch 9, **dadurch gekennzeichnet, dass** die Vorrichtung zum Signalisieren OSPF-LSA-Nachrichten verwendet.

## Revendications

1. Un procédé de recherche d'un trajet destiné à l'acheminement d'un appel d'un noeud source (SN) vers un noeud de destination (DN) par l'intermédiaire d'un réseau de communication, **caractérisé en ce que**
le noeud source (SN) génère un nombre aléatoire qui dépend de la capacité et de la bande passante libre de la liaison, **en ce que**, en fonction du nombre aléatoire généré, au moins un trajet entre le noeud source (SN) et le noeud de destination (DN) sera sélectionné à partir du noeud source (SN), et **en ce que** le noeud source (SN) génère pour chaque trajet sélectionné un nombre aléatoire distinct, dans lequel le noeud source (SN) entretient une base de données d'état de liaisons, et lorsque le noeud source (SN) souhaite calculer un trajet de lui-même vers un noeud de destination (DN), le noeud source (SN) calcule un trajet pour les données de l'appel par l'intermédiaire du réseau, dans lequel, pour la recherche d'un trajet du noeud source (SN) au noeud de destination (DN) par l'intermédiaire du réseau, le noeud source (SN) sélectionne un trajet le plus court par l'intermédiaire du réseau, le trajet le plus court étant le trajet avec la distance ou le coût total cumulé minimal des liaisons qu'il comprend, la distance ou le coût d'au moins une liaison impliquée étant randomisé, et la distance étant une variable aléatoire qui dépend de la capacité et de la bande passante libre de la liaison.

2. Le procédé selon la revendication 1, **caractérisé en ce que** le nombre aléatoire est une variance d'une distance de liaison.

3. Le procédé selon l'une quelconque des revendications précédentes, **caractérisé en ce que** la signalisation vers d'autres noeuds sur l'ensemble du réseau est mise en oeuvre par des messages OSPF-LSA.

4. Le procédé selon l'une quelconque des revendications précédentes,
**caractérisé en ce que** le nombre aléatoire est la somme de variables aléatoires calculées au niveau de chaque liaison d'un trajet considéré.

5. Le procédé selon l'une quelconque des revendications précédentes, **caractérisé en ce que** le procédé utilise un algorithme d'acheminement de qualité de service pour la sélection d'un trajet.

6. Le procédé selon la revendication 5, **caractérisé en ce que** l'algorithme de Dijkstra et/ou l'algorithme de Bellman-Ford sera utilisé en tant qu'algorithme d'acheminement de qualité de service.

7. Le procédé selon l'une quelconque des revendications précédentes, **caractérisé en ce qu'**un noeud de destination (DN) est un dispositif d'extrémité, un dispositif d'extrémité d'un réseau mobile, un ordinateur, un ordinateur mobile et/ou un PDA.

8. Le procédé selon l'une quelconque des revendications précédentes, **caractérisé en ce qu'**un réseau de communication est un réseau de communication mobile et/ou un réseau de données.

9. Un appareil de recherche d'un trajet destiné à l'acheminement d'un appel d'un noeud source (SN) vers un noeud de destination (DN) par l'intermédiaire d'un réseau de communication,
- avec le noeud source (SN) destiné à la génération d'un nombre aléatoire qui dépend de la capacité et de la bande passante libre de la liaison,
- avec le noeud source (SN) destiné à la sélection d'au moins un trajet entre le noeud source (SN) et le noeud de destination (DN) en fonction du nombre aléatoire généré
- avec le noeud source (SN) destiné à la génération d'un nombre aléatoire distinct pour chaque trajet sélectionné, dans lequel le noeud source (SN) entretient une base de données d'état de liaisons, et lorsque le noeud source (SN) souhaite calculer un trajet de lui-même à un noeud de destination (DN), le noeud source (SN) calcule un trajet pour les données de l'appel par l'intermédiaire du réseau, dans lequel, pour la recherche d'un trajet du noeud source (SN) vers le noeud de destination (DN) par l'intermédiaire du réseau, le noeud source (SN) sélectionne un trajet le plus court par l'intermédiaire du réseau, le trajet le plus court étant le trajet avec la distance ou le coût total cumulé minimal des liaisons qu'il comprend, la distance ou le coût d'au moins une liaison impliquée étant randomisé, et la distance étant une variable aléatoire qui dépend de la capacité et de la bande passante libre de la liaison.

10. Un appareil selon la revendication 9, **caractérisé en ce que** ledit appareil de signalisation utilise des messages OSPF-LSA.
